# EUROPEAN PATENT SPECIFICATION

(11) **EP 1 736 850 B1**
(45) Date of publication and mention of the grant of the patent: **30.09.2009**
(21) Application number: 05253708.1
(22) Date of filing: 15.06.2005
(51) Int. Cl.: G06F 1/32

(54) **Power management for portable electronic device with integrated pointing device**
Leistungssteuerung für Tragbares Elektronisches Gerät mit einer Hinweisvorrichtung
Gestion de l'énergie dans un appareil électronique portatif avec dispositif de pointage

(43) Date of publication of application: 27.12.2006
(73) Proprietor: Research In Motion Limited, Waterloo, Ontario N2L 3W8 (CA)
(72) Inventor: Moosavi, Vahid, Kitchener Ontario, N2R 1K6 (CA); Geraee Nezhad Fard, Somayeh, Kitchener Ontario N2R 1K6 (CA)
(74) Representative: Roberts, Gwilym Vaughan

(56) References cited:
- EP-A- 1 357 510
- US-A1- 2004 021 635
- US-B1- 6 266 050
- PATENT ABSTRACTS OF JAPAN vol. 1999, no. 14, 22 December 1999 (1999-12-22) & JP 11 242560 A (NEC HOME ELECTRON LTD), 7 September 1999 (1999-09-07)

## Description

### Field of the Invention

The invention relates to the field of electronic devices, and, more particularly, to portable electronic devices and related methods.

### Background of the Invention

An electronic device may conserve power by using a power management scheme that switches various system components to a low-power state based upon user settings and/or user input. Such a low-power state may be referred to as a standby, sleep, or hibernation state. The electronic device may transition to an active or high-power state from the low-power state when something triggers the electronic device to begin a wake-up routine.

One way to trigger the wake-up routine for the electronic device is by using programmable state transitions as is disclosed by U.S. Published Application No. 2003/0145242 to Derocher et al. The electronic device includes a clock that generates a signal in response to a programmed time of day to initialize a wake-up routine for the electronic device. Similarly, U.S. Patent No. 5,530,879 to Crump et al. also discloses a system that initiates a wake-up routine based on a signal from a timer, as well as from a signal received from a switch or modem connected to the system.

U.S. Published Application No. 2003/0159076 to Delisle et al. also discloses an electronic device using switches to initialize a wake-up routine. The electronic device includes a keyboard controller that is connected to power, standby, lid open/close, and battery insertion/removal switches. An activation signal sent by any of the foregoing switches causes the keyboard controller to initiate a wake-up routine for the electronic device.

Another way to initiate a wake-up routine is for an electronic device to be responsive to a pointing device. U.S. Patent No. 5,990,868 to Frederick discloses a pointing device for an electronic device that includes a power management system connected to a trackball. The power management system continually monitors the trackball for activity and adjusts the power level of the trackball according to the amount of time in has been idle. U.S. Patent No. 5,974,558 to Cortopassi et al. discloses an electronic device having a digitizer panel that uses a passive stylus as a pointing device. The electronic device may go into a low-power state after a predetermined period of inactivity, and the stylus touching the digitizer panel initializes a wake-up routine.

Power management is especially important for a portable electronic device whose operation may be limited by the operational charge of its battery. Inadvertent initialization of the wake-up routine results in unnecessary power usage in such a battery powered portable electronic device. For example, portable electronic devices like cell phones and wireless email devices are often carried in a user's pocket, which may result in inadvertent initialization of the wake-up routine due to unintentional contact between the pocket and trigger mechanism. Unfortunately, the various power management schemes of initializing wake-up routines disclosed by the prior art may not be able to discriminate between intentional and inadvertent initialization of the wake-up routine. EP 1357510 Klinghult discloses a pointing device enabling means, input device and portable device incorporating same, wherein the pointing device is energized when the sensed activation of the pointing device exceeds a threshold.

### Summary of the Invention

In view of the foregoing background, it is therefore an object of the invention to provide an electronic device that conserves power by discriminating between intentional and inadvertent initialization of the wake-up routine.

According to one aspect of the present invention, there is provided a portable electronic device as defined in claim 1 of the appended claims. Accordingly, a portable electronic device is provided that may conserve power by discriminating between intentional and inadvertent initialization of the wake-up routine.

The non-random pattern may correspond to manipulation of the pointing device at a uniform speed and in a uniform direction. The non-random pattern may further correspond to manipulation of the pointing device for at least a threshold distance.

The pointing device may comprise a trackball, and the threshold distance may correspond to rotation of the trackball for at least one hundred degrees, for example. Alternately, the pointing device may comprise a joystick, a trackwheel, or a touchpad. The pointing device may be exposed on an outer surface of the housing.

The electronic circuitry may comprise a processor and a power management module cooperating with the processor. The processor may perform email and scheduling functions, for example. The electronic circuitry may also comprise a wireless transceiver.

According to another aspect of this invention, there is provided a method as defined in claim 11 of the appended claims.

### Brief Description of the Drawings

FIG. 1 is a schematic diagram of a portable electronic device in accordance with the invention.
FIG. 2 is a more detailed schematic diagram, partially in section, of a portion of the portable electronic device as shown in FIG. 1.
FIG. 3 is a non-random pattern pulse timing diagram as may be generated by the pointing device of the portable electronic device of FIG. 1.
FIG. 4 is a random pattern pulse timing diagram as may be generated by the pointing device of the portable electronic device of FIG. 1.
FIG. 5 is a random pattern pulse timing diagram as may be generated by the pointing device of the portable electronic device of FIG. 1.
FIG. 6 is a flow chart illustrating a method according to the invention.
FIG. 7 is a more detailed schematic block diagram of an alternate embodiment of a portable electronic device according to the invention.

### Detailed Description of the Preferred Embodiments

The invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

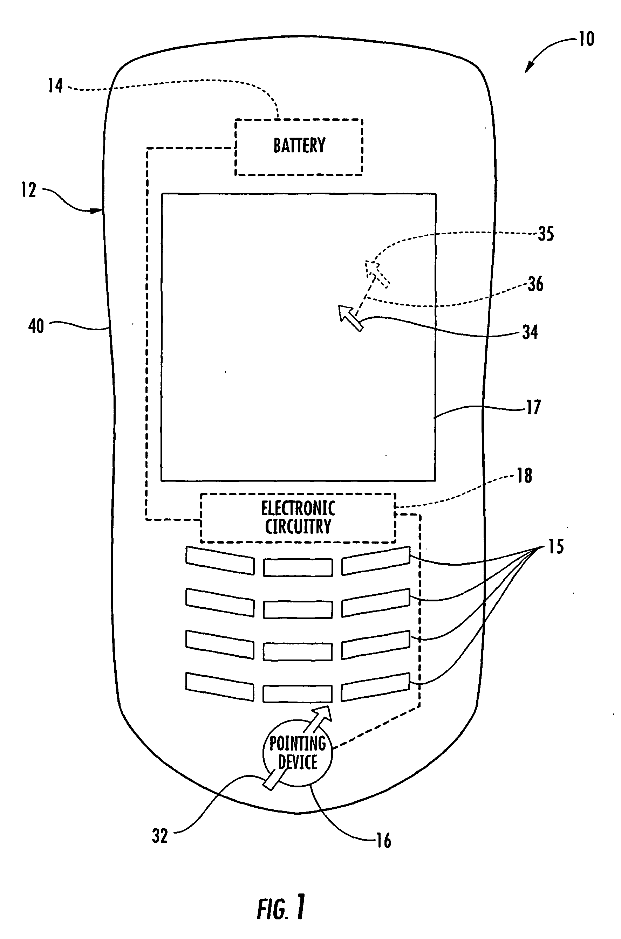

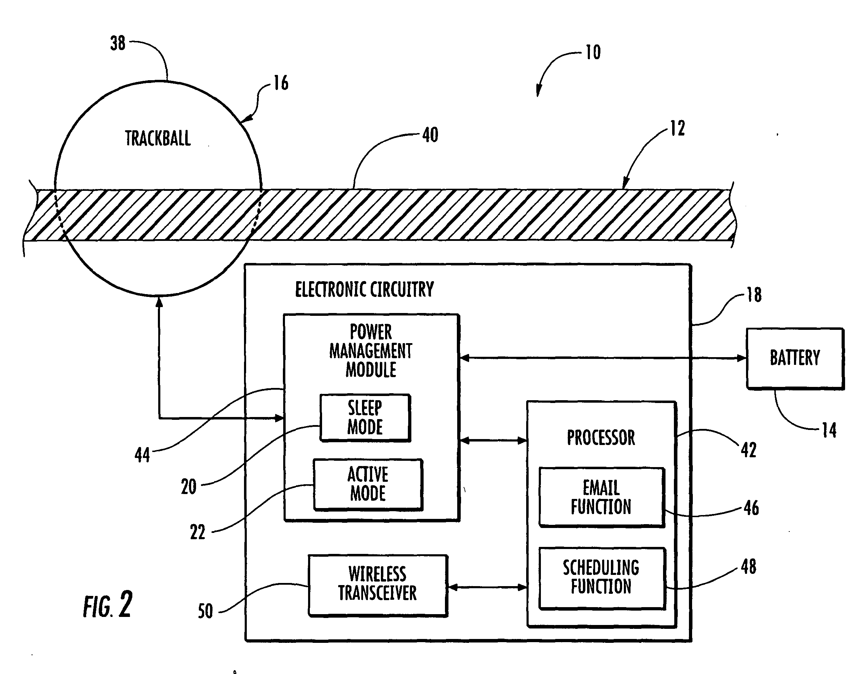

Referring initially to FIGS. 1 and 2, a portable electronic device **10** in accordance with the invention is now described. The portable electronic device **10** illustratively includes a portable housing **12,** and a battery **14** and pointing device **16** carried by the portable housing. The portable electronic device **10** further includes electronic circuitry **18** carried by the portable housing **12** and connected to the battery **14** and the pointing device **16** as will be appreciated by those skilled in the art. The electronic circuitry **18** switches from a sleep mode **20** to an active mode **22** based upon operation of the pointing device **16** in a non-random pattern, and does not switch from the sleep mode to the active mode based upon operation of the pointing device in a random pattern. Accordingly, the portable electronic device **10** may conserve power by discriminating between intentional and inadvertent initialization of the wake-up routine.

The portable electronic device **10** also illustratively includes a display screen **17** and input keys **15.** Both the display screen **17** and input keys **15** are connected to the electronic circuitry **18** as will be appreciated by those of skill in the art. The portable electronic device **10** may be in the form of a cell phone, personal digital assistant (PDA), wireless email device, pager, or the like.

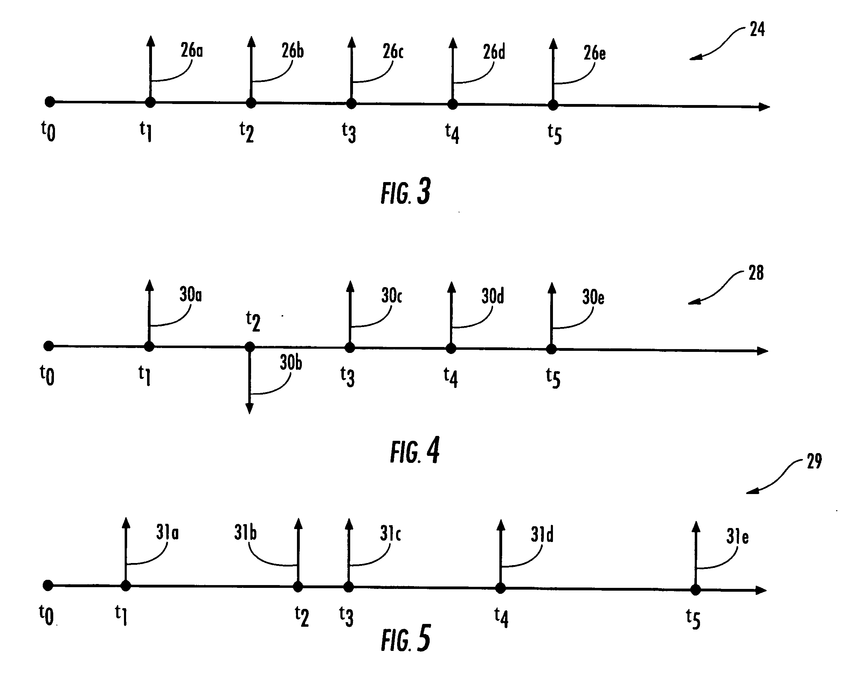

Referring now additionally to FIGS. 3-5, exemplary graphs illustrate exemplary time/direction pulses **26a-26e** for the non-random pattern **24** and the time/direction pulses 30a-30e and 31a-31e for the random patterns 28 and 29. The time/direction pulses 26a-26e, 30a-30e, and 31a-31e are generated by the electronic circuitry 18 receiving signals from the manipulation of the pointing device **16** at times **t₀-t₅** as will be appreciated by those of skill in the art. The exemplary graphs are illustrated in one axis for ease of understanding, although the portable electronic device **10** may generate time/direction pulses **26a-26e, 30a-30e,** and **31a-31e** in more than one axis.

The time/direction pulses 26a-26e, 30a-30e, and 31a-31e received by the electronic circuitry 18 may be a series of light pulses. For example, a traditional opto-mechanical trackball system uses two different colored lights, one light sensor, and an encoder wheel connected to an axis that engages the trackball to generate a series of light pulses used by electronic circuitry and/or processor to determine the speed and direction of the trackball as will be appreciated by those of skill in the art. Alternately, the pulses may be generated by other sensor systems such as a Hall effect sensor working in combination with a magnet.

The spacing between each time/direction pulse **26a-26e, 30a-30e,** and **31a-31e** represents the speed at which the pointing device **16** is traveling between two adjacent times **t₀-t₅,** and the arrow on each time/direction pulse **26a-26e, 30a-30e,** and 31a-31e represents the direction that the pointing device 16 is traveling at a given time **t₀-t₅.** For instance, the non-random pattern **24** corresponds to manipulation of the pointing device 16 at a uniform speed and in a uniform direction.

The manipulation may involve a user moving the pointing device 16 in a specific direction as indicated by manipulation arrow 32 (FIG. 1). If the portable electronic device 10 were in an active mode, this action would move the pointer 34 along the dashed path 36 to a new position as resented by the dashed pointer 35 (FIG. 1). The non-random pattern 24 may further correspond to manipulation of the pointing device **16** for at least a threshold distance as will be appreciated by those of skill in the art.

A random pattern **28** may correspond to manipulation of the pointing device **16** at a uniform speed, but in a non-uniform direction as indicated by the time/direction pulse **30b** pointing in a different direction than the other time/direction pulses **30a, 30c, 30d,** and **30e** for example. Alternately, the random pattern **29** may correspond to manipulation of the pointing device **16** at a non-uniform speed, but in a uniform direction as indicated by the difference in spacing between time/direction pulse **31a** and **31b.** Additionally, the random pattern may include other time/direction pulse combinations.

Returning again to FIGS. 1 and 2, the pointing device **16** may comprise a trackball **38,** and the threshold distance may correspond to rotation of the trackball for at least one hundred degrees, for example, as will be appreciated by those of skill in the art. Alternately, the pointing device **16** may comprise a joystick, a trackwheel, or a touchpad. The pointing device **16** may be exposed on an outer surface **40** of the housing **12** and thus be susceptible to contact with a user's pocket, for example.

The electronic circuitry **18** illustratively comprises a processor **42** and a power management module **44** cooperating with the processor as will be appreciated by those of skill in the art. The processor **42** may perform email functions **46** and/or scheduling functions **48,** for example. The electronic circuitry may also comprise a wireless transceiver **50.**

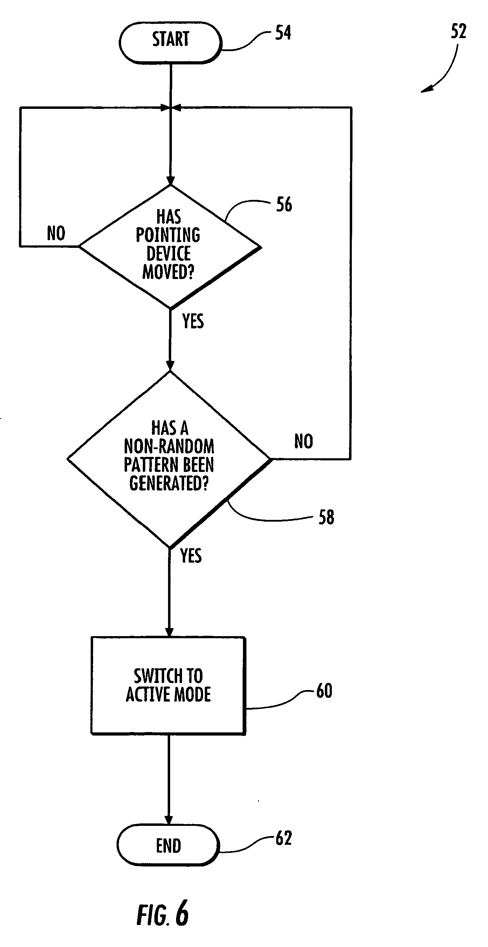

A method aspect of the invention is for the power management of a portable electronic device **10** and is now described with reference to the flowchart **52** of FIG. 6. The portable electronic device **10** may include a portable housing **12,** a battery **14** and a pointing device **16** carried by the portable housing, and electronic circuitry **18** carried by the portable housing and connected to the battery and the pointing device. The method starts at Block **54** and begins with the electronic circuitry **18** checking to see if the pointing device **16** has moved at Block **56.** The portable electronic device **10** is considered as being in the sleep or low power mode initially. It may enter the sleep mode by user selection or based on a period of inactivity, for example. If the pointing device **16** has not moved, the electronic circuitry **18** continues to monitor the pointing device. If the pointing device **16** has moved, the electronic circuitry **18** determines if a non-random pattern **24** has been generated at Block **58.** If a non-random pattern **24** has been generated, the electronic circuitry **18** switches from a sleep mode **20** to an active mode **22** based upon operation of the pointing device **16** in a non-random pattern at Block **60.** If a non-random pattern **24** has not been generated, the electronic circuitry **18** does not switch from the sleep mode **20** to the active mode **22** based upon operation of the pointing device **16** in the random pattern **28.** The method ends at Block **62.**

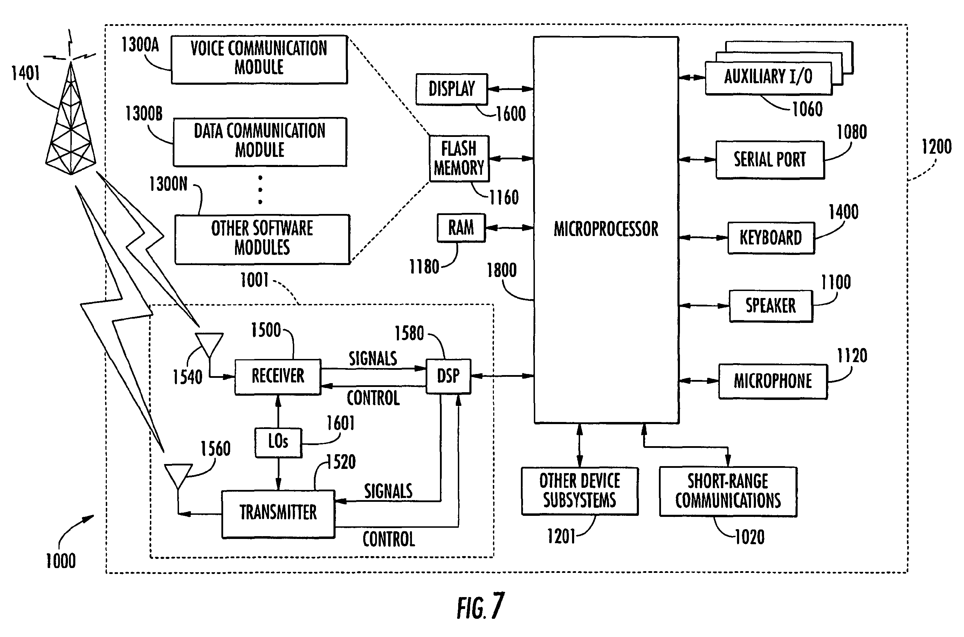

Another example of a handheld mobile wireless communications device **1000** that may be used in accordance the present invention is further described with reference to FIG. 7. The device **1000** includes a housing **1200,** a keyboard **1400** and an output device **1600.** The output device shown is a display **1600,** which is preferably a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400** by the user.

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 7. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that other modifications and embodiments are intended to be included within the scope of the appended claims.

## Claims

1. A portable electronic device comprising:
a portable housing;
a battery carried by said portable housing;
a pointing device carried by said portable housing; and
electronic circuitry carried by said portable housing and connected to said battery and said pointing device, said electronic circuitry arranged to switch from a sleep mode to an active mode based upon operation of said pointing device in a non-random pattern and not switch from the sleep mode to the active mode based upon operation of said pointing device in a random pattern.

2. The portable electronic device according to Claim 1 wherein the non-random pattern corresponds to manipulation of said pointing device at a uniform speed and in a uniform direction.

3. The portable electronic device according to Claim 2 wherein the non-random pattern further corresponds to manipulation of said pointing device for at least a threshold distance.

4. The portable electronic device according to Claim 3 wherein said pointing device comprises a trackball.

5. The portable electronic device according to Claim 4 wherein the threshold distance corresponds to rotation of said trackball for at least one hundred degrees.

6. The portable electronic device according to Claim 1 wherein said pointing device comprises at least one of a trackball, a joystick, a trackwheel, and a touchpad.

7. The portable electronic device according to Claim 1 wherein said electronic circuitry comprises a processor and a power management module cooperating therewith.

8. The portable electronic device according to Claim 1 wherein said electronic circuitry comprises a wireless transceiver.

9. The portable electronic device according to Claim 1 wherein said electronic circuitry comprises a processor performing at least one of email and scheduling functions.

10. The portable electronic device according to Claim 1 wherein said pointing device is exposed on an outer surface of said housing.

11. A method of power management for a portable electronic device comprising a portable housing, a battery and pointing device carried by the portable housing, and electronic circuitry carried by the portable housing and connected to the battery and the pointing device, the method comprising:
switching the electronic circuitry from a sleep mode to an active mode based upon operation of the pointing device in a non-random pattern; and
not switching the electronic circuitry from the sleep mode to the active mode based upon operation of the pointing device in a random pattern.

12. The method according to Claim 11 wherein the non-random pattern corresponds to manipulation of the pointing device at a uniform speed and in a uniform direction.

13. The method according to Claim 12 wherein the non-random pattern further corresponds to manipulation of the pointing device for at least a threshold distance.

14. The method according to Claim 13 wherein the pointing device comprises a trackball.

15. The method according to Claim 14 wherein the threshold distance corresponds to rotation of the trackball for at least one hundred degrees.

16. The method according to Claim 11 wherein the pointing device comprises at least one of a trackball, a joystick, a trackwheel, and a touchpad.

17. The method according to Claim 11 wherein the electronic circuitry comprises a processor and a power management module cooperating therewith.

18. The method according to Claim 11 wherein the electronic circuitry comprises a wireless transceiver.

19. The method according to Claim 11 wherein the electronic circuitry comprises a processor performing at least one of email and scheduling functions.

20. The method according to Claim 11 wherein the pointing device is exposed on an outer surface of the housing.

## Patentansprüche

1. Tragbare elektronische Vorrichtung, die aufweist:
ein tragbares Gehäuse;
eine Batterie, die durch das tragbare Gehäuse aufgenommen wird;
eine Zeigevorrichtung, die durch das tragbare Gehäuse aufgenommen wird; und
elektronische Schaltungen, die durch das tragbare Gehäuse aufgenommen sind und mit der Batterie und der Zeigevorrichtung verbunden sind, wobei die elektronischen Schaltungen ausgebildet sind, von einem Schlaf- bzw. Bereitschafts-Modus in einen aktiven Modus zu schalten basierend auf einer Operation der Zeigevorrichtung in einem nicht-zufälligen Muster, und nicht von dem Bereitschafts-Modus in den aktiven Modus zu schalten basierend auf einer Operation der Zeigevorrichtung in einem zufälligen Muster.

2. Tragbare elektronische Vorrichtung gemäß Anspruch 1, wobei das nicht-zufällige Muster einer Manipulation bzw. Führung der Zeigevorrichtung mit einer gleichbleibenden Geschwindigkeit und in eine gleichbleibende Richtung entspricht.

3. Tragbare elektronische Vorrichtung gemäß Anspruch 2, wobei das nicht-zufällige Muster weiter einer Manipulation der Zeigevorrichtung um zumindest eine Schwellenentfernung entspricht.

4. Tragbare elektronische Vorrichtung gemäß Anspruch 3, wobei die Zeigevorrichtung einen Trackball aufweist.

5. Tragbare elektronische Vorrichtung gemäß Anspruch 4, wobei die Schwellenentfernung einer Rotation des Trackballs um zumindest 100 Grad entspricht.

6. Tragbare elektronische Vorrichtung gemäß Anspruch 1, wobei die Zeigevorrichtung zumindest eines aufweist aus einem Trackball, einem Joystick, einem Trackwheel und einem Touchpad.

7. Tragbare elektronische Vorrichtung gemäß Anspruch 1, wobei die elektronischen Schaltungen einen Prozessor und ein damit zusammenarbeitendes Leistungsmanagementmodul aufweisen.

8. Tragbare elektronische Vorrichtung gemäß Anspruch 1, wobei die elektronischen Schaltungen einen drahtlosen Transceiver aufweisen.

9. Tragbare elektronische Vorrichtung gemäß Anspruch 1, wobei die elektronischen Schaltungen einen Prozessor aufweisen, der zumindest eine aus Email- und Scheduling-Funktionen durchführt.

10. Tragbare elektronische Vorrichtung gemäß Anspruch 1, wobei die Zeigevorrichtung an einer äußeren Oberfläche des Gehäuses exponiert ist.

11. Verfahren eines Leistungsmanagements für eine tragbare elektronische Vorrichtung, die ein tragbares Gehäuse, eine Batterie und eine Zeigevorrichtung, die durch das tragbare Gehäuse aufgenommen sind, und elektronische Schaltungen aufweist, die durch das tragbare Gehäuse aufgenommen sind und mit der Batterie und der Zeigevorrichtung verbunden sind, wobei das Verfahren aufweist:
Schalten der elektronischen Schaltungen von einem Schlaf- bzw. Bereitschafts-Modus in einen aktiven Modus basierend auf einer Operation der Zeigevorrichtung in einem nicht-zufälligen Muster; und
kein Schalten von dem Bereitschafts-Modus in den aktiven Modus basierend auf einer Operation der Zeigevorrichtung in einem zufälligen Muster.

12. Verfahren gemäß Anspruch 11, wobei das nicht-zufällige Muster einer Manipulation bzw. Führung der Zeigevorrichtung mit einer gleichbleibenden Geschwindigkeit und in eine gleichbleibende Richtung entspricht.

13. Verfahren gemäß Anspruch 12, wobei das nicht-zufällige Muster weiter einer Manipulation der Zeigevorrichtung um zumindest eine Schwellenentfernung entspricht.

14. Verfahren gemäß Anspruch 13, wobei die Zeigevorrichtung einen Trackball aufweist.

15. Verfahren gemäß Anspruch 14, wobei die Schwellenentfernung einer Rotation des Trackballs um zumindest 100 Grad entspricht.

16. Verfahren gemäß Anspruch 11, wobei die Zeigevorrichtung zumindest eines aufweist aus einem Trackball, einem Joystick, einem Trackwheel und einem Touchpad.

17. Verfahren gemäß Anspruch 11, wobei die elektronischen Schaltungen einen Prozessor und ein damit zusammenarbeitendes Leistungsmanagementmodul aufweisen.

18. Verfahren gemäß Anspruch 11, wobei die elektronischen Schaltungen einen drahtlosen Transceiver aufweisen.

19. Verfahren gemäß Anspruch 11, wobei die elektronischen Schaltungen einen Prozessor aufweisen, der zumindest eine aus Email- und Scheduling-Funktionen durchführt.

20. Verfahren gemäß Anspruch 11, wobei die Zeigevorrichtung an einer äußeren Oberfläche des Gehäuses exponiert ist.

## Revendications

1. Dispositif électronique portable, comprenant :
un boîtier portable ;
une pile ou batterie portée par ledit boîtier portable ;
un dispositif de pointage porté par ledit boîtier portable ; et
des circuits électroniques portés par ledit boîtier portable et connectés à ladite pile ou batterie et audit dispositif de pointage, lesdits circuits électroniques étant configurés de façon à effectuer une commutation d'un mode de veille à un mode actif en fonction d'un fonctionnement dudit dispositif de pointage selon un motif non aléatoire, et à ne pas effectuer de commutation du mode de veille au mode actif en fonction d'un fonctionnement dudit dispositif de pointage selon un motif aléatoire.

2. Dispositif électronique portable selon la revendication 1, dans lequel le motif non aléatoire correspond à une manipulation dudit dispositif de pointage à une vitesse uniforme et dans une direction uniforme.

3. Dispositif électronique portable selon la revendication 2, dans lequel le motif non aléatoire correspond de plus à une manipulation dudit dispositif de pointage sur au moins une distance de seuil.

4. Dispositif électronique portable selon la revendication 3, dans lequel ledit dispositif de pointage comprend une boule de commande.

5. Dispositif électronique portable selon la revendication 4, dans lequel la distance de seuil correspond à une rotation de ladite boule de commande d'au moins cent degrés.

6. Dispositif électronique portable selon la revendication 1, dans lequel ledit dispositif de pointage comprend au moins l'un parmi une boule de commande, une manette, une molette de commande, et un bloc tactile.

7. Dispositif électronique portable selon la revendication 1, dans lequel lesdits circuits électroniques comprennent un processeur et un module de gestion d'alimentation coopérant avec celui-ci.

8. Dispositif électronique portable selon la revendication 1, dans lequel lesdits circuits électroniques comprennent un émetteur-récepteur sans fil.

9. Dispositif électronique portable selon la revendication 1, dans lequel lesdits circuits électroniques comprennent un processeur effectuant au moins l'une parmi des fonctions de courriel et de programmation d'évènements.

10. Dispositif électronique portable selon la revendication 1, dans lequel ledit dispositif de pointage est exposé sur une surface extérieure dudit boîtier.

11. Procédé de gestion d'alimentation pour un dispositif électronique portable comprenant un boîtier portable, une pile ou batterie et un dispositif de pointage porté par le boîtier portable, et des circuits électroniques portés par le boîtier portable et connectés à la pile ou batterie et au dispositif de pointage, le procédé comprenant :
la commutation des circuits électroniques d'un mode de veille à un mode actif en fonction d'un fonctionnement du dispositif de pointage selon un motif non aléatoire ; et
la non-commutation des circuits électroniques du mode de veille au mode actif en fonction d'un fonctionnement du dispositif de pointage selon un motif aléatoire.

12. Procédé selon la revendication 11, dans lequel le motif non aléatoire correspond à une manipulation du dispositif de pointage à une vitesse uniforme et dans une direction uniforme.

13. Procédé selon la revendication 12, dans lequel le motif non aléatoire correspond de plus à une manipulation du dispositif de pointage sur au moins une distance de seuil.

14. Procédé selon la revendication 13, dans lequel le dispositif de pointage comprend une boule de commande.

15. Procédé selon la revendication 14, dans lequel la distance de seuil correspond à une rotation de la boule de commande d'au moins cent degrés.

16. Procédé selon la revendication 11, dans lequel le dispositif de pointage comprend au moins l'un parmi une boule de commande, une manette, une molette de commande, et un bloc tactile.

17. Procédé selon la revendication 11, dans lequel les circuits électroniques comprennent un processeur et un module de gestion d'alimentation coopérant avec celui-ci.

18. Procédé selon la revendication 11, dans lequel les circuits électroniques comprennent un émetteur-récepteur sans fil.

19. Procédé selon la revendication 11, dans lequel les circuits électroniques comprennent un processeur effectuant au moins l'une parmi des fonctions de courriel et- de programmation d'évènements.

20. Procédé selon la revendication 11, dans lequel le dispositif de pointage est exposé sur une surface extérieure du boîtier.
